# EUROPÄISCHE PATENTSCHRIFT

(11) **EP 1 029 005 B1**
(45) Veröffentlichungstag und Bekanntmachung des Hinweises auf die Patenterteilung: **06.02.2002**
(21) Anmeldenummer: 97951142.5
(22) Anmeldetag: 06.11.1997
(51) Int. Cl.: C09D 5/00, C09D 5/02

(54) **SELBSTORGANISIERENDE BESCHICHTUNGEN**
SELF-ARRANGING COATING
REVETEMENT AUTOORGANISATEUR

(43) Veröffentlichungstag der Anmeldung: 23.08.2000
(73) Patentinhaber: Max-Planck-Gesellschaft zur Förderung der Wissenschaften e.V., 80539 München (DE)
(72) Erfinder: THÜNEMANN, Andreas, 14469 Potsdam (DE); LOCHHAAS, Helmut, D-12209 Berlin (DE)
(74) Vertreter: Weiss, Wolfgang, Dipl.-Chem. Dr.
(86) Internationale Anmeldenummer: EP9706173
(87) Internationale Veröffentlichungsnummer: WO9924513

(56) Entgegenhaltungen:
- WO-A-93/01243
- WO-A-97/24407
- DE-A- 3 942 113
- US-A- 4 492 781

## Beschreibung

Die Erfindung betrifft ein Beschichtungsmittel, eine dieses Beschichtungsmittel enthaltende Zusammensetzung, Verfahren zum Überziehen von Oberflächen mit dem Beschichtungsmittel und mit dem Beschichtungsmittel überzogene Gegenstände. Das Beschichtungsmittel basiert auf einem Komplex aus Polyelektrolyten und entgegengesetzt geladenen Tensiden. Die Tenside enthalten kovalent an Kohlenstoffatome gebundenes Fluor. Das Beschichtungsmaterial verleiht verschiedenen Oberflächen oleophobe oder/und hydrophobe Eigenschaften. Der Hydrophobizitätsgrad und andere Eigenschaften wie etwa Gas- oder Feuchtigkeitspermeation sind über einen weiten Bereich einstellbar. Die Beschichtung kann durch Einsatz von Zusatzstoffen permanent oder temporär ausgeführt werden. Aus dem auf einfache Weise variierbaren Eigenschaftsprofil, der unkomplizierten Auftragung und der geringen Schichtdicke folgt eine große Anwendungsbreite, beispielsweise als Antisoiling-, Antigraffiti- oder Antihaft-Beschichtung.

im Bereich der Beschichtungstechniken existiert eine nahezu unüberschaubare Anzahl an unterschiedlichen Beschichtungsmaterialien für jeweils sehr spezifische Anwendungen. In einigen ist eine Kombination von Polyelektrolyten und Tensiden beschrieben.

In der DE 42 28 975 A1 ist die oleophobe und/oder permanente hydrophobe Ausrüstung für polymere Oberflächen mit einem dünnen Film beschrieben. Der Film ist aus wenigstens einer Schicht eines wasserlöslichen Polykations und/oder eines kationischen Kunstharzes gebildet. Zur weiteren Verbesserung der oleophoben und/oder permanent hydrophoben Eigenschaften kann der Film zusätzlich ein langkettiges Tensid oder ein alkylsubstituiertes Polyanion enthalten. Im beschriebenen Verfahren wird die Oberfläche zuerst mit einer Polykationlösung und anschließend gegebenenfalls mit einem alkylsubstituierten Polyanion als zweite Komponente oder einem langkettigen Tensid behandelt. Somit sind zur Beschichtung mindestens zwei verschiedene Arbeitsgänge notwendig. Weiterhin ist eine Voraussetzuung für Anwendung des Verfahrens, daß die zu beschichtende Oberfläche ein negatives Zetapotential besitzt.

Dieser Schicht-für-Schicht-Aufbau durch Adsorption aus wässriger Lösung wird zu wissenschaftlichen Zwecken bereits seit vielen Jahren eingesetzt und ist in einer Übersicht von Decher (Science 277 (1997), 1232-1237) beschrieben.

Die internationale Patentanmeldung WO 96/11981 beschreibt ein fluorcarbonhaltiges Additiv, das nachträglich auf lackierte Unterlagen aufgebracht wird und diese vor Verschmutzung schützt bzw. die Reinigung erleichtert. Diese Additive basieren auf diskreten Oligomeren, welche aus einem polyfunktionellen oligomeren Kernteil bestehen, an den fluorierte Alkylketten kovalent gebunden sind. Der schmutzabweisende Charakter wird durch die fluorierten Alkylketten erreicht, während die Haftung auf dem Lack durch den funktionalisierten Kern hervorgerufen wird. Diese Art von Schutz durch Additive ist stark limitiert auf wohl definierte, d.h. staubfreie lackierte Oberflächen. Weiterhin sind zur Herstellung der fluorierten Additive Reaktionszeiten von 6 Stunden bis zu zwei Wochen notwendig.

Im US-Patent 5,330,788 wird eine temporäre Beschichtung für Oberflächen beschrieben, die vor allem zum Schutz beim Transport von Automobilen entwickelt wurde. Die Beschichtung basiert auf einem filmbildenden Acrylsäurepolymer, einem nichtionischen acetylenisch ungesättigten Tensid, gegebenenfalls einem Phosphatester-Tensid und einer Base zur Neutralisation. Das Beschichtungsmaterial kann in Kontakt mit einem speziellen, ebenfalls im Patent beschriebenen alkalischen wässrigen Medium schnell entfernt werden. Ausgesprochen ungünstig erscheinen die langen Trockenzeiten für die Beschichtung, die mit "über Nacht" oder mit 24 Stunden angegeben werden. Da es sich bei der Hauptkomponente, der Polyacrylsäure, um einen Polyelektrolyten handelt, der als Superabsorber Anwendung findet (z.B. Einsatz in Babywindeln und zur Verbesserung der Wasserrückhaltefähigkeit von trockenen Böden), kann nicht davon ausgegangen werden, daß diese wirtschaftlich unzumutbar langen Trockenzeiten wesentlich verkürzt werden können.

Das US-Patent 5,387,434 beschreibt ein Antigraffiti-Mittel, dessen Schutzwirkung auf Natriumsilikat beruht. Da dieses wasserlöslich ist, muß die Grenzschicht zwischen Substrat und Umgebung hydrophob ausgestattet werden. Dies wird durch Latex, Silicone oder Wachse erreicht. Besonders geeignet sind mikrokristalline Wachsemulsionen, die durch Natriumligninsulfonat stabilsiert sind. Für die Entfernung von Graffiti sind Hochdruckdampfstrahler mit einem Druck von 100 psi notwendig und Temperaturen bis 90°C. Damit ist dieses Verfahren nur für sehr sezielle Untergründe geeignet, die diese Bedingungen ohne Schädigung zulassen. im Patent ist keine Angabe über die Trockungsdauer der Beschichtung zu finden. Es muß aber davon ausgegangen werden, daß die Vernetzung des Silikats einige Stunden bis Tage benötigt. Weiterhin dürfte die Trocknung, die durch das zugesetzte Wachs verlangsamt wird, ebenfalls mindestens einen Tag in trockenem Klima in Anspruch nehmen.

In DE 36 30 520 C1 wird ein Verfahren zur Verhütung von Farbauftragungen auf Flächen aus Natur- und Kunststein beschrieben. Das Verfahren besteht aus zwei Schritten: Zuerst wird eine anorganische Imprägnierung aufgetragen, die nicht näher spezifiziert ist. Danach erfolgt die Auftragung einer farbaufnehmenden ablösbaren wachsartigen Beschichtung, die durch Hochdruck-Heißwasser entfernt werden kann. Dieses Verfahren ist dadurch, daß mindestens zwei verschiedene Arbeitsgänge notwendig sind, sehr zeitaufwendig. Bei typischen anorganischen Imprägnierungen sind bei trockenem Wetter mindestens ein bis drei Tage notwendig. Weiterhin ist dieses Verfahren nur für eine sehr begrenzte Anzahl spezieller Untergründe anwendbar.

Die europäische Patentanmeldung EP 0 695 772 A1 beschreibt eine Klasse von fluorhaltigen Polyethern, die auf Mauerwerk aufgetragen werden, dort vernetzen und einen dichten Anti-Graffiti-Schutzfilm bilden. Die Synthese der vernetzbaren Substanzen ist jedoch zeitaufwendig und kostspielig und das aufgetragene Rohmaterial benötigt eine Trockenzeit von 48 Stunden auf dem Mauerwerk, um hinreichend zu vernetzen. Weiterhin ist der Einsatzbereich auf die Beschichtung von Mauerwerk beschränkt.

Im Handel befindet sich ein Oberflächenschutz der Firma PSS (Protective Surface System) auf der Basis eines Polysaccharid-Gemisches. Laut Prüfungszeugnis der Bundesanstalt für Materialforschung (Gutachten Nr. 3.14.3441-91) sind mit dem System PSS 20 für einen guten Schutz vor Graffiti drei Anstriche mit Trocknungszeiten von jeweils 24 bis 72 Stunden notwendig. Damit sind zum Aufbringen der Schutzschicht 3 bis 9 Tage erforderlich.

Alle genannten Beschichtungsverfahren sind durch einen eng begrenzten Einsatzbereich und z.T. durch mehrtätige Trockenzeiten für die Schutzschichten charakterisiert.

DE-A-44 28 641 beschreibt mesomorphe Komplexe aus anionischen Polyelektrolyten, kationischen Polyelektrolyten und/oder Polyampholyten und kationischen, anionischen, nichtionischen und/oder amphoteren Tensiden. Bedingt durch die mesomorphe Struktur werden allgemein verbesserte Materialeigenschaften wie z.B. eine erhöhte mechanische Festigkeit erwartet. Die aus diesen amorphen oder mesomorphen Polyelektrolyten aufgebauten Materialien wie Filme oder Membranen beinhalten als wesentliche Komponente Tenside mit einem Kohlenwasserstoffgerüst. Mit den dort beschriebenen fluorfreien Komplexen lassen sich jedoch keine Beschichtungen mit niederenergetischen Oberflächen herstellen.

Antonietti et al. (Adv. Mater. 8 (1996), 41-45) und Lochhaas et al. (Polyelectrolyte-surfactant complexes with fluorinated surfactants: A new type of material for coatings, (3rd Conference in the Series: High Performance Coating Materials, Fluorine in Coatings II, 24.-26. Februar 1997, München, Deutschland) beschreiben Komplexe aus kationischen Polyelektrolyten und anionischen fluorhaltigen Tensiden. Als kationische Polyelektrolytkomponenten werden Polyacrylsäure, Polymethacrylsäure und Poly-(diallyl-dimethylammoniumchlorid) offenbart. Diese Komplexe neigen bei Kontakt mit Feuchtigkeit sehr stark zu Wasseraufnahme, sie quellen stark auf und werden dabei weich bis gelartig. Dies führt zu einer erheblichen Verschlechterung der mechanischen Eigenschaften, so daß sie für praktische Anwendungen als Beschichtungsmaterial unbrauchbar sind.

Die der vorliegenden Erfindung zugrundeliegende Aufgabe bestand darin, ein Beschichtungsmaterial zu entwickeln, bei dem die Nachteile des Standes der Technik mindestens teilweise beseitigt sind. Insbesondere soll das Beschichtungsmaterial durch einfache Verfahren auf beliebige Oberflächen auftragbar sein und selbst bei Einsatz geringer Substanzmengen eine niederenergetische Oberfläche erzeugen. Weiterhin soll das Beschichtungsmaterial gegenüber einer wasserhaltigen Umgebung möglichst stabil sein.

Diese Aufgabe wird gelöst durch Bereitstellung eines Beschichtungsmaterials, basierend auf einem Komplex, der mindestens einen nichthygroskopischen Polyelektrolyten und mindestens ein entgegengesetzt geladenes fluoriertes Tensid enthält.

Das erfindungsgemäße Beschichtungsmaterial ermöglicht überraschenderweise eine Anreicherung fluorierter organischer Gruppen z.B. Alkylketten an seiner Oberfläche, so daß die oleophoben - bzw. hydrophoben - Eigenschaften der beschichteten Oberfläche verbessert werden. Durch die Kombination von nichthygroskopischem Polyelektrolyt und fluoriertem ionischem Tensid wird ein hochgeordneter mechanisch stabiler Komplex gebildet, der einerseits auf nahezu beliebigen Unterlagen haftet und andererseits eine stark fluorhaltige, niederenergetische Oberfläche ausbildet. Ausreichende Haftfähigkeit und die Bildung niederenergetischer Oberflächen sind an sich widerstrebende Prinzipien, die überraschenderweise durch die erfindungsgemäße Kombination von nichthygroskopischen Polyelektrolyten und Fluortensid in einem Material vereinigt werden können.

Der erfindungsgemäße Komplex kann einen kationischen Polyelektrolyten und ein anionisches Tensid oder einen anionischen Polyelektrolyten und ein kationisches Tensid enthalten. Vorzugsweise werden kationische Polyelektrolyte und anionische Tenside verwendet.

Die Stöchiometrie des Komplexes ist bezogen auf die Ladungen von Polyelektrolyt und Tensid vorzugsweise derart, daß im wesentlichen ein Ladungsausgleich bezüglich Polyelektrolyt auf der einen Seite und Tensid auf der anderen Seite vorliegt. Günstigerweise beträgt die Stöchiometrie des Komplexes bezogen auf die Ladungen von Polyelektrolyt und Tensid daher etwa 1,5:1 bis 1:1,5, besonders bevorzugt etwa 1,3:1 bis 1:1,3 und am meisten bevorzugt etwa 1:1.

Weiterhin weist der Komplex vorzugsweise eine mesomorphe Struktur auf, wie durch Messen der Röntgenkleinwinkelstreuung bestimmt werden kann. Außerdem ist bevorzugt, daß die erfindungsgemäßen Komplexe keine Kristallinität besitzen, wie durch Messung der Röntgenweitwinkelstreuung bestimmt werden kann.

Die erfindungsgemäßen Komplexe sind erhältlich durch Zugabe einer wässrigen Lösung des Polyelektrolyten zu einer wässrigen Lösung des fluorierten Tensids und Gewinnen des resultierenden, sich spontan ausbildenden Präzipitats. Sowohl bei Zugabe eines kationischen Polyelektrolyten in wässriger Lösung zu einer wässrigen Lösung des anionischen fluorierten Tensids als auch bei Zugabe eines anionischen Polyelektrolyten zu einem kationischen fluorierten Tensid entsteht der erfindungsgemäß bervorzugte Komplex mit einer Stöchiometrie von etwa 1:1 bezogen auf die Ladungen von Polyelektrolyt und Tensid. Weiterhin wird das Entstehen dieses bevorzugten Komplexes durch Arbeiten bei einer erhöhten Temperatur von mindestens 40°C, besonders bevorzugt von 50 bis 90°C begünstigt. im umgekehrten Fall - der Zugabe einer Tensidlösung zur Polyelektrolytlösung - findet man oftmals erhebliche Abweichungen von der bevorzugten Stöchiofnetrie, die unter Umständen zu einem unerwünschten starken Anstieg der Hygroskopizität führen können.

Der als Präzipitat entstehende erfindungsgemäße supramolekulare Polymerkomplex kann in polaren organischen Lösungmitteln gelöst werden. Dies ist überraschend, da polymere Materialien mit hohem Fluoranteil üblicherweise extrem schwerlöslich oder sogar völlig unlöslich sind. Bei Aufbringen dieser Komplexlösung auf eine Oberfläche und Verdunsten des Lösungsmittels bildet sich ein dünner aus dem Komplexmaterial bestehender, üblicherweise transparenter Film auf der Oberfläche. Es wurde gefunden, daß die Oberflächenenergie nach Beschichtung mit den erfindungsgemäßen Komplexmaterialen in allen Fällen niedriger war, als vor der Beschichtung. Dies führt zu einer verminderten Haftung von Verunreinigungen auf der Oberfläche. Dieser Effekt wurde auf einer großen Anzahl verschiedener Oberflächen, beispielsweise Glas, Stein, Holz, Papier, Metall, Kunststoffen, Naturstoffen wie etwa Baumwollfasern und auch lackierten Oberflächen gefunden, das heißt, er ist unabhängig von der Art des Untergrunds bei gleichzeitiger guter Haftung der Beschichtung.

Weiterhin wurde überraschenderweise gefunden, daß die erfindungsgemäßen Komplexe mit nichtionischen, vorzugsweise nichtionischen fluorierten Tensiden gut emulgierbar sind. Auf diese Weise können die Komplexe auch mit einem wässrigen Trägermaterial verarbeitet und somit besonders umweltfreundlich aufgetragen werden.

Ein weiterer Gegenstand der vorliegenden Erfindung ist somit ein Komplex aus Polyelektrolyt und ionischen fluoriertem Tensid, der weiterhin mindestens ein nichtionisches, vorzugsweise ein nichtionisches fluoriertes Tensid enthält. Der Anteil des nichtionischen Tensids kann je nach Art der Anwendung über einen breiten Bereich variiert werden und kann beispielsweise bis zu 200 % (w/w) bezogen auf das Gewicht des Komplexes betragen.

Durch Variation des Anteils an Emulgator, d.h. nichtionischen Tensid, kann die Permanenz der Beschichtung gesteuert werden. Für das Aufbringen permanenter Beschichtungen sollte der Anteil am nichtionischen Tensid bis zu maximal 20 %, vorzugsweise bis zu 10 % und besonders bevorzugt bis zu 5 % jeweils bezogen auf das Gewicht des Komplexes betragen. Für temporäre Beschichtungen sind Anteile des nichtionischen Tensids von 20 bis 200 % und insbesondere von 50 bis 80 % bezogen auf das Gewicht des Komplexes bevorzugt. Bei hohem Emulgatoranteil kann die Beschichtung durch haushaltsübliche Tensidlösungen abgewaschen werden. Dies ist besonders für eine temporäre Transportbeschichtung z.B. von Automobilien von hohem Interesse.

Außerdem wurde gefunden, daß die Gasdurchlässigkeit sowie die Wasseraufnahmekapazität durch geeignete Kombinationen von Polyelektrolyt und Tensid im großen Umfang variiert werden können. Dies ist von großer Bedeutung, da es bei vielen Beschichtungen wie z.B. Antigraffiti-Schutzschichten notwendig ist, die Oberflächen nicht zu versiegeln, um eine Schimmel- und Schwammbildung zu verhindern.

Die erfindungsgemäßen Komplexverbindungen sind einfach und schnell, z.B. aus wässriger Lösung, herstellbar. Sie lassen sich sowohl als Lösung wie auch als wässrige Emulsion zu dünnen Filmen auf beliebigen Oberflächen verarbeiten. Bei sehr geringem Materialaufwand senken diese Filme die Oberflächenenergie stark herab, womit sie nahezu universell dort einsetzbar sind, wo Oberflächen mit teflonähnlichen Eigenschaften erforderlich oder erwünscht sind.

Durch die nur geringen Schichtdicken, die zur Senkung der Oberflächenenergie erforderlich sind, der einfachen Herstellung und der kurzen Trockenzeiten, ist die Beschichtung pro Flächeneinheit sehr kostengünstig. Die Trockenzeiten der Filme können auf wenige Minuten bzw. Stunden reduziert werden. Die Beschichtung läßt eine elastische Biegung der beschichteten Gegenstände zu. Die Filmbeschichtungen sind vorzugsweise transparent und nicht oder nur schwer, z.B. bei schräg einfallendem Licht, erkennbar. Die Atmungsaktivität, d.h. die Durchlässigkeit von Gasen und Wasserdampf, sowie die Wasseraufnahme ist in weiten Grenzen einstellbar.

Die Beschichtung von Oberflächen mit den erfindungsgemäßen Polyelektrolyt-Fluortensid-Komplexen ist immer dann zweckmäßig, wenn eine Verringerung natürlicher oder künstlicher Verschmutzung angestrebt wird. Zu diesem Zweck wird die Oberfläche mit einem dünnen Film beschichtet. Unabhängig von der Art der Oberfläche, wird die Oberflächenenergie durch die Beschichtung reduziert. Die Beschichtung erlaubt eine elastische Biegung des beschichteten Gegenstandes ohne abzuplatzen oder abzublättern. Die Filme sind bei Temperaturen von bis zu 100°C langzeitstabil. Abhängig vom verwendeten Komplex können Temperaturstabilitäten sogar von 120 bis zu 230°C erreicht werden.

Mit Ausnahme stark hygroskopischer Polyelektrolyte wie Polyacrylsäure, Polymethacrylsäure und Poly-(diallyl-dimethylammonium chlorid) und Salzen davon eignen sich beliebige Kombinationen von Polyelektrolyten und fluorierten ionischen Tensiden. Bei Verwendung erfindungsgemäßer nichthygroskopischer Polyelektrolyten werden Komplexe erhalten, die eine geringe Wasseraufnahme von vorzugsweise maximal 5% (w/w), besonders bevorzugt maximal 4,5% (w/w) und am meisten bevorzugt maximal 4% (w/w) bezogen auf das Gewicht des Komplexes bei 20°C und 100% relativer Luftfeuchtigkeit aufweisen.

Polyelektrolyte sind Substanzen, die mehrere positive oder negative Ladungsträger enthalten. Eine bevorzugte Klasse kationischer Polyelektrolyte sind Polymere, welche vorzugsweise mindestens 20 % einer oder mehrerer der folgenden Monomereinheiten enthalten, mit der Maßgabe, daß der resultierende Polyelektrolyt ein nichthygroskopischer Polyelektrolytim Sinne der vorliegenden Erfindung ist:
- Positiv geladene Stickstoffgruppen, z.B. quaternäre Ammoniumgruppen oder N-substituierte heteroaromatische Gruppen tragende ethylenisch ungesättigte Monomere entweder als Salze, wie sie durch Umsetzung basischer Aminofunktionen mit Mineralsäuren, z.B. Salzsäure, Schwefelsäure oder Salpetersäure, erhalten werden oder in quaternisierter Form (z.B. durch Umsetzung mit Dialkylsulfaten wie etwa Dimethylsulfat, Diethylsulfat etc, Alkylchloriden wie etwa Methylchlorid, Ethylchlorid etc. oder Benzylchlorid), z.B. Dimethylaminoethylacrylat-hydrochlorid, Diallyldimethylammoniumchlorid, Dimethylaminoethylacrylat-methosulfat, Dimethylaminopropylmethacrylamid-methochlorid, Dimethylaminopropylmethacrylamidmethosulfat, Vinylpyridiniumsalze oder 1-Vinylimidazoliumsalze.

Gegebenenfalls kann der kationische Polyelektrolyt neben den kationischen Monomereinheiten auch ein oder mehrere nichtionische Monomere, z.B. bis zu 80 mol% enthalten. Die Anwesenheit nichtionischer Monomere ist in manchen Fällen, z.B. bei Poly-(diallyl-dimethyl-ammoniumchlorid) zur Verringerung der Hygroskopizität erforderlich.

Beispiele für geeignete nichtionische Monomere sind C₁- bis C₂₀-Alkyl- und Hydroxyalkylester und insbesondere Amide und N-substituierte Amide von monoethylenisch ungesättigten C₃- bis C₁₀- Monocarbonsäuren oder C₄- bis C₈-Dicarbonsäuren, z.B. Acrylamid, Methacrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.-Butylacrylamid oder N-Octadecylacrylamid,Mateinsäuremonomethylhexylamid,Maleinsäuremonodecylamid, Dimethyl-aminopropylmethacrylamid oder Acrylamidoglykolsäure, weiterhin Alkylaminoalkyl(meth)acrylate, z.B. Dimethylaminoethylacrylat, Dimethylaminomethacrylat, Ethylaminoethylacrylat, Diethylaminoethylmethacrylat, Dimethylaminopropylacrylat oder Dimethylaminopropylmethacrylat, weiterhin Vinylester, z.B. Vinylformiat, Vinylacetat oder Vinylpropionat, wobei diese nach der Polymerisation auch verseift vorliegen können, weiterhin N-Vinylverbindungen, z.B. N-Vinylpyrrolidon, N-Vinylcaprolactam, N-Vinylformamid, N-Vinyl-N-methylformamid, 1-Vinylimidazol, 1-Vinyl-2-methylimidazol oder N-Methylvinylacetamid.

Ein Beispiel von kationischen Polyelektrolyten, die aus kationischen und nichtionischen Monomeren bestehen, ist wie folgt:
- Copolymere von Dialkenyl-dialkylammoniumsalzen, z.B. Diallyldimethylammoniumchlorid, mit nichtionischen Monomeren, z.B. N-Methyl-vinyl-acetamid, wobei der Anteil an nichtionischem Monomer vorzugsweise mindestens 20 mol% beträgt.
Weitere bevorzugte Klassen kationischer Polyelektrolyte sind:
- Polyethylenimine und alkylsubstituierte Polyethylenimine, z.B. Poly-(ethylenimin-co-N-docosylethylimin);
- lonene, d.h. Polymere mit mehreren quaternären Ammoniumgruppen, die beispielsweise durch Umsetzung von di-tertiären Aminen mit α-, ω-Dihalogenalkenen entstehen, z.B. lonen-6,3 und
- kationische Gruppen enthaltende Polysaccharide, insbesondere β-glykosidisch verknüpfte Polysaccharide, wie etwa Chitosan.

Die genannten kationischen Polyelektrolyte können in Basenform, teilweise neutralisiert oder vollständig neutralisiert zur Herstellung der erfindungsgemäßen Komplexe eingesetzt werden.

Darüber hinaus sind für das erfindungsgemäße Verfahren auch anionische Polyelektrolyte geeignet. Eine bevorzugte Klasse solcher anionischen Polyelektrolyte sind Polymere, welche vorzugsweise mindestens 20 mol% einer oder mehrerer der folgenden Monomereinheiten enthalten mit der Maßgabe, daß der resultierende Polyelektrolyt ein nichthygroskpischer Polyelektrolyt im Sinne der vorliegenden Erfindung ist:
- ethylenisch ungesättigte Carbonsäuren sowie Salze und Derivate davon, z.B. C₃- bis C₁₀-Monocarbonsäuren, deren Alkalimetall- oder/und Ammoniumsalze, beispielsweise Dimethylacrylsäure oder Ethylacrylsäure, C₄- bis C₈-Dicarbonsäuren, deren Halbester, Anhydride, Alkalimetallsalze oder/und Ammoniumsalze, z.B. Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid;
- Sulfonsäuregruppen enthaltende ethylenisch ungesättigte Monomere, beispielsweise Allylsulfonsäure, Styrolsulfonsäure, Vinylsulfonsäure, Acrylsäure-3-sulfopropylester oder Methacrylsäure-3-sulfopropylester,
   - Phosphin-, Phosphon- oder Phosphorsäuregruppen enthaltende monoethylenisch ungesättigte Monomere, z.B. Vinylphosphonsäure, Allylphosphonsäure, oder Acrylamidomethylpropanphosphonsäure.

Gegebenenfalls können diese anionischen Polymere eines oder mehrere der zuvor genannten nichtionischen Monomere, beispielsweise in einem Anteil von bis zu 80 mol%, enthalten. Die Verwendung von Copolymeren aus anionischen und nichtionischen Monomeren wird für einige der anionischen Monomere zur Verringerung der Hygroskopizität bevorzugt.

Eine weitere bevorzugte Klasse anionischer Polyelektrolyte sind anionische Gruppen enthaltende Polysaccharide.

Die anionischen Polyelektrolyte können in der Säureform, teilneutralisiert oder vollständig neutralisiert eingesetzt werden.

lonische fluorierte Tenside sind Substanzen, die mindestens ein an ein Kohlenstoffatom gebundenes Fluoratom, vorzugsweise mindestens eine -CF₂- oder/und CF₃-Gruppe und mindestens einen Ladungsträger enthalten.

Anionische fluorierte Tenside umfassen mindestens eine Fluor-enthaltende hydrophobe Gruppe und mindestens einen negativen Ladungsträger. Beispiele solcher Verbindungen sind fluorierte Carbonsäuren sowie deren Salze mit anorganischen oder organischen Kationen, fluorierte Sulfonsäuren sowie deren Salze mit anorganischen oder organischen Kationen, fluorierte Organoschwefelsäuren sowie deren Salze mit anorganischen oder organischen Kationen, fluorierte Phosphin-, Phosphon- oder Organophosphorsäuren sowie deren Salze mit anorganischen oder organischen Kationen.

Bevorzugte dieser Verbindungsklassen sind wie folgt:
- Perfluorcarbonsäuren und deren vorzugsweise wasserlöslichen Salze, wie etwa Perfluoralkansäuren, z.B. insbesondere Perfluoralkansäuren der Formel CF₃(CF₂)ₙ-COOH, wobei n vorzugsweise ≥ 7 ist;
- teilfluorierte Carbonsäuren und Carbonsäuresalze, wie etwa teilfluorierte Alkansäuren, teilfluorierte Alkensäuren, Perfluoralkoxyalkansäuren, Perfluoralkylethylenoxyalkansäuren, Perfluoralkoxybenzoesäuren sowie Sulfid-, Sulfon-, Carbonsäureamid-, Hydroxy-, Oxo- oder/und Ethergruppen enthaltende teilfluorierte Carbonsäuren und Salze davon; z.B. Lithium-3-[(1H,1H,2H,2H,fluoralkyl)thio)-propionat,Zonyl FSA® , Du Pont);
- Perfluorsulfonsäuren und deren vorzugsweise wasserlöslichen Salze, wie etwa Perfluoralkansulfonsäuren der Formel: CF₃(CF₂)ₘ-SO₃H mit m ≥ 1;
- teilfluorierte Sulfonsäuren sowie deren vorzugsweise wasserlöslichen Salze, wie etwa teilfluorierte Alkansulfonsäuren, z.B. Perfluoralkylethansulfonsäuren, Perfluorpropylalkansulfonsäuren, teilfluorierte Arylsulfonsäuren, z.B. Perfluoralkylbenzolsulfonsäuren, Perfluoralkoxybenzolsulfonsäuren, Perfluoracylbenzolsulfonsäuren, teilfluorierte Alkensulfonsäuren, sowie Sulfid-, Carbonsäureamid-, Hydroxy-, Oxo- oder/und Ethergruppen enthaltende teilfluorierte Sulfonsäuren, fluorierte Sulfoester, z.B. Sulfobernsteinsäureester, Perfluoralkylsulfopropionate, Perfluoralalkylsulfobutyrate und Salze davon; z.B. Perfluoralkylethylsulfonsäure-Ammoniumsalz, Zonyl TBS® Du Pont, Natrium-[bernsteinsäure-diperfluoralkylethyl-diester-2-sulfonat], Fluowet SB® , Hoechst;
- fluorierte organische Schwefelsäuren und deren Salze wie etwa perfluoralkylierte Methylsulfate, fluoriertes Sulfatopoly(oxyethylen), perfluorpropoxylierte Sulfate und Salze davon;
- fluorierte Phosphin- und Phosphonsäuren sowie deren vorzugsweise wasserlöslichen Salze, z.B. Fluowet PL80® , Hoechst;
- fluorierte organische Phosphorsäuren und deren Salze, wie etwa Perfluoralkylethanphosphorsäuren, Mono- und Bis(fluoralkyl)phosphorsäuren, Perfluoralkylphosphorsäuren, fluorierte Alkenphosphorsäuren, fluorierte Phosphatalkylester, z.B. Phosphorsäureperfluorafkylester-ammoniumsalz, Zonyl FSE® und Zonyl FSP® , Du Pont.

Auch kationische Tenside sind für das erfindungsgemäße Verfahren geeignet. Bevorzugte Klassen solcher Verbindungen sind:
- fluorierte Amine und Ammoniumsalze wie etwa Fluoralkylammoniumsalze, die gegebenenfalls Carbonsäureamid-, Sulfonsäureamid-, Sulfid-, Ester- oder/und Hydroxygruppen enthalten können, oder heterocyclische Stickstoffverbindungen, z.B. Perfluoralkylethyltrialkylammonium-methosulfat, Hoe-L-3658-1, Hoechst.

Beispiele für nichtionische, insbesondere fluorierte Tenside sind Verbindungen, die eine oder mehrere nichtionische hydrophile Gruppen und ein oder mehrere fluorhaltige hydrophobe Gruppen enthalten. Bevorzugte Beispiele solcher Verbindungen sind fluorierte Alkohole, z.B. solche, die eine oder mehrere Oxyethylen- oder Oxypropylengruppen enthalten, fluorierte Polyether, fluorierte mehrwertige Alkohole, oxyalkylierte Perfluorphenole, Perfluoralkyl-2-ethanthiolderivate sowie Carbonsäureamid- oder Sulfonsäureamidgruppen enthaltende Verbindungen.

Weitere zweckmäßige ionische fluorierte Tenside, die zur Herstellung der Komplexe eingesetzt werden können, bzw. nichtionische fluorierte Tenside, die als Emulgatoren für die Herstellung wässriger Emulsionen eingesetzt werden können, sind im Buch von Erik Kissa ((Fluorinated Surfactants, Surfactant Science Series Vol. 50, Marcel Decker, Inc. New York, 1994) beschrieben. Erfindungsgemäße Komplexe, die weiterhin ein nichtionisches Tensid enthalten, werden vorzugsweise hergestellt, indem man einen Komplex aus Polyelektrolyt und fluoriertem ionischen Tensid mit dem jeweils gewünschten Anteil an nichtionischem Tensid versetzt.

Ein weiterer Gegenstand der vorliegenden Erfindung ist eine Zusammensetzung, die einen erfindungsgemäßen Komplex aus Polyelektrolyt und ionischem fluoriertem Tensid gelöst in einem polaren organischen Lösungsmittel enthält. Diese Zusammensetzung enthält den Komplex vorzugsweise in einem Anteil von 0,1 bis 30 % (w/w), besonders bevorzugt 0,5 bis 10 % (w/w) und am meisten bevorzugt 1 bis 5 % (w/w) bezogen auf das Gewicht der Zusammensetzung. Das Lösungsmittel ist vorzugsweise ein flüchtiges, möglichst ungiftiges organisches Lösungsmittel, beispielsweise Methanol, Ethanol, Aceton, Essigester oder Mischungen davon.

Ein weiterer Gegenstand der vorliegenden Erfindung ist eine Zusammensetzung, die einen erfindungsgemäßen Komplex aus Polyelektrolyt und ionischem fluorierten Tensid und vorzugsweise nichtionischem Tensid emulgiert in einem wässrigen Lösungsmittel enthält. Vorzugsweise liegt der Komplex in einem Anteil von 0,1 bis 30 % (w/w), besonders bevorzugt 0,5 bis 10 % (w/w) und am meisten bevorzugt 1 bis 5 % (w/w) bezogen auf das Gewicht der Emulsion vor. Die erfindungsgemäße Emulsion ist überraschenderweise für mindestens 2 Wochen bei 20°C stabil.

Die erfindungsgemäße Emulsion ist erhältlich durch Versetzen eines Komplexes aus Polyelektrolyt und ionischem fluoriertem Tensid mit einem nichtionischen Tensid in der jeweils gewünschten Menge, Überführen in ein im wesentlichen homogenes Gemisch und vorzugsweise portionsweises verdünnen des Gemisches mit Wasser, um eine wässrige Emulsion zu erhalten.

Die erfindungsgemäßen Komplexe, bzw. die den Komplex enthaltenden Zusammensetzungen könnten zur Beschichtung von Oberflächen verwendet werden. Beispielhafte Anwendungen sind als Antisoiling-, insbesondere als Antigraffitimittel, als Schutzmittel beim Transport von Fahrzeugen, z.B. Automobilen oder Maschinen, als Vereisungsschutz, insbesondere für die zivile oder militärische Luftfahrt, als Anti-Fouling-Beschichtung in der Schiffahrt, als Trenn- und Gleitmittel, z.B. bei der Produktion von Fliesen, Ziegeln oder Bauschalungen, als Mittel zur Imprägnierung von Textilien, z.B. Baumwolle mit GoreTex-Eigenschaften, Teppichböden und als Membran, z.B. als Gastrennmembran.

Außerdem betrifft die Erfindung ein Verfahren zur Beschichtung einer Oberfläche, wobei man auf die Oberfläche eine erfindungsgemäße Zusammensetzung aufbringt und eintrocknen läßt. Dieser Beschichtungsvorgang - kann sofern erforderlich - auch mehrfach gegebenenfalls mit jeweils verschiedenen Komplexen durchgeführt werden. Das Aufbringen kann aus einer organischen Lösung oder aus einer wässrigen Emulsion erfolgen. Die Trocknungsdauer beträgt für organische Lösungen vorzugsweise maximal 1 Stunde, besonders bevorzugt einige Sekunden bis Minuten. Die Trocknungsdauer für wässrige Emulsionen beträgt vorzugsweise maximal 6 Stunden, besonders bevorzugt maximal 3 Stunden. Das Beschichtungsmittel Kann diskontinuierlich oder kontinuierlich durch übliche Techniken wie etwa Sprühen, Gießen, Eintauchen oder mechanisches Auftragen, z.B. Walzenauftrag, aufgebracht werden. Die Dicke der Beschichtung beträgt vorzugsweise 0,1 µm bis 1 mm, besonders bevorzugt 1 bis 10 µm.

Noch ein weiterer Gegenstand der vorlie genden Erfindung ist ein Gegenstand, der mindestens teilweise mit einem Überzug enthaltend einen erfindungsgemäßen Komplex aus Polyelektrolyt und fluoriertem ionischem Tensid beschichtet ist. Die beschichtete Oberfläche weist vorzugsweise eine Energie von weniger als 20 mN/m auf. Die Beschichtung ist vorzugsweise im wesentlichen transparent, d.h. durchsichtig für sichtbares Licht. Weiterhin ist die Beschichtung vorzugsweise bei Kontakt mit einer wasserhaltigen Atmosphäre stabil, d.h. neigt nicht zu signifikantem Aufquellen. Darüber hinaus ist die Beschichtung vorzugsweise bis zu einer Temperatur von 100°C stabil. Je nach Anforderung kann die Beschichtung permanent oder temporär, luft-oder/und feuchtigkeitsdurchlässig, bzw. luft- oder/und feuchtigkeitsundurchlässig sein.

Ein Vorteil der erfindungsgemäßen Beschichtungen besteht darin, daß sie an ihrer der Umgebung zugewandten Oberfläche einen erhöhten Fluoranteil verglichen mit dem inneren der Beschichtung aufweisen, was zur Verringerung der Oberflächenenergie beiträgt. Außerdem besitzen sie vorzugsweise eine Kontaktwinkel-Hysterese zwischen 5° und 20°. Darüber hinaus weisen die erfindungsgemäßen Beschichtungen eine geringe Wasseraufnahme auf, die vorzugsweise maximal 5% (w/w), besonders bevorzugt maximal 4,5% (w/w) und am meisten bevorzugt maximal 4% (w/w) bezogen auf das Gewicht der Beschichtung bei 20°C und 100% relativer Luftfeuchte beträgt.

Weiterhin wird die Erfindung durch die nachfolgenden Abbildungen und Beispiel erläutert. Es zeigen:
- Abb.1: Die Bruchkante des Films eines erfindungsgemäßen Komplexes abgebildet im Scanning-Elektronenmikroskop (oben) bzw. in einer Fluor-spezifischen EDX-Analyse (unten)
- Abb.2 und 3: Röntgenweitwinkeldiffraktogramme von Polyelektrolyt-Fluortensid-Kompiexen.

### Beispiele

### 1. Präparation von Komplexen

Die in den Beispielen angegebenen Trockenzeiten betragen in vielen Fällen 12 h. Sie wurden so lang gewählt, damit die Ausbeuten genau bestimmt werden konnten. Für gewerbliche Zwecke sind kurze Trockenzeiten von ca. 30 min oder keine Trockenzeiten ausreichend. Die Komplexe sind auch ohne Trocknung im Vakuum weiterverwendbar.

### 1.1 komplexe von Poly-(diallyl-dimethylammonium)

Keiner der Komplexe, die Poly-(diallyl-dimethylammonium) als Polyelektrolyt enthalten, ist als Beschichtungsmaterial einsetzbar, da die Wasseraufnahme bei Feuchtigkeit so hoch ist, daß eine starke Quellung einsetzt. Da sehr unterschiedliche Tenside durchgetestet wurden, ist die Quellung auf den Polyelektrolyten zurückzuführen. Sie sind hier aufgeführt, um zu zeigen, daß sie den erfindungsgemäßen Komplexen deutlich unterlegen sind. Analoge Ergebnisse werden bei Komplexen gefunden, die Polyacryl- oder Polymethacrylsäure als Polyelektrolyt enthalten.

### 1.1.1 Poly-(diallyl-dimethylammonium)-Fluowet SB®

18 g (28% w/w, 5,5 mmol, 1,1 eq) Fluowet SB® werden in 150 ml entsalztem Wasser vorgelegt (0,037 M). Bei Raumtemperatur erfolgt unter Rühren tropfenweise die Zugabe (ca. 1 Tropfen pro Sekunde) einer Lösung aus 0,81 g (5 mmol, 1 eq) Poly-(diallyl-dimethylammoniumchlorid) in 50 ml entsalztem Wasser (1,6% w.w.). Mit einem Büchnertrichter wird der Niederschlag sofort abfiltiert, anschließend gewaschen (3 mal mit je 20 ml auf 60°C temperiertes Wasser) und im Vakuumtrockenschrank bei 30°C und 0,1 mbar 12 h getrocknet. Die Ausbeute beträgt 4,5g (88% der Theorie).

Auf analoge Weise wird ein Poly-(diallyl-dimethylammonium)-Fluowet PL80® Komplex hergestellt. Die Ausbeute beträgt 87% der Theorie.

### 1.1.2 Poly-(diallyl-dimethylammonium)-Zonyl FSA®

Es werden 4,0 g (25% w/w) Zonyl FSA® in 150 ml entsalztem Wasser gelöst. Mit Natronlauge (10% w/w) wird die Lösung auf einen pH-Wert von 9 eingestellt. Bei 50°C erfolgt unter Rühren die langsame Zugabe (1 Tropfen pro Sekunde) einer Lösung aus 0,1 g Poly-(diallyl-dimethylammoniumchlorid) (0,62 mmol) in 50 ml entsalztem Wasser. Anschließend wird der pH-Wert mit Salzsäure (10%-ig) auf pH 3 eingestellt. Es entsteht ein feiner weißer Niederschlag, der mit einem Büchnertrichter abfiltiert, gewaschen (3 mal mit je 20 ml auf 60°C temperiertes Wasser) und im Vakuumtrockenschrank bei 30°C und 0,1 mbar getrocknet wird. Die Ausbeute beträgt 0,3 g (84% der Theorie, bei Annahme 0,28 g C₆F₁₃CH₂CH₂SCH₂CH₂COOLi).

Auf analoge Weise werden folgende Komplexe hergestellt:
- Poly-(diallyl-dimethylammonium)-Zonyl FSE® (90% Ausbeute)
- Poly-(diallyl-dimethylammonium)-Zonyl FSP® (80% Ausbeute)
- Poly-(diallyl-dimethylammonium)-Zonyl TBS® (84% Ausbeute)
- Poly-(diallyl-dimethylammonium)-n-perfluorbutansulfonat (75% Ausbeute)
- Poly-(diallyl-dimethylammonium)-n-perfluoroctansulfonat (86% Ausbeute)

### 1.1.3 Poly-(diallyl-dimethylammonium)-1H,1H,2H,2H-Perfluorethylsulfonat

Es werden 0,5g (1,17 mmol, 1,6 eq) 1 H, 1H,2H,2H-Perfluorethylsulfonsäure in 50 ml entsalztem Wasser vorgelegt und mit Natronlauge (10% w/w) auf einen pH-Wert von 7 eingestellt. Bei Raumtemperatur erfolgt unter Rühren die langsame Zugabe (1 Tropfen pro Sekunde) von 0,17 g Poly-(diallyldimethylammoniumchlorid (1,06 mmol, 1,0 eq) in 50 ml entsalztem Wasser. Es entsteht ein feiner weißer Niederschlag, der sofort mit einem Büchnertrichter abfiltriert und dann gewaschen (3 mal mit je 20 ml auf 60°C temperiertes Wasser) und im Vakuumtrockenschrank bei 30°C und 0,1 mbar getrocknet wird. Die Ausbeute beträgt 0,50 g (86% der Theorie).

### 1.2 Komplexe des statistischen kationischen Copolymers Poly-(diallyldimethylammonium)-co-N-methyl-N-vinylacetamid in unterschiedlicher Ladungsdichte mit perfluorierten Carbonsäuren

Die folgende Serie von Copolymeren wurde hergestellt, um den Einfluß der Ladungsdichte auf die Wasseraufnahme und die Oberflächeneigenschaften zu untersuchen.

Es werden 1,1 eq n-Perfluorcarbonsäure (F(CF₂)ₚCOOH) in 100 ml entsalztem Wasser vorgelegt und mit Natronlauge (10% w.w.) auf einen pH-Wert von 9 eingestellt. Bei 60°C (bzw. 80°C für die langkettige Säure mit p=17) erfolgt unter Rühren die langsame Zugabe (1 Tropfen pro Sekunde) einer Lösung aus 1,0 eq eines statistischen Copolymeren aus Diallyldimethylammoniumchlorid (DADMAC, 1 eq.) und N-Methyl-N-vinylacetamid (NMVA) in 50 ml entsalztem Wasser. Nach Einstellung des pH-Wertes mit Salzsäure (10% w.w.) auf pH 3 entsteht ein weißer Niederschlag. Dieser wird mit einem Büchnertrichter sofort abfiitriert, dann gewaschen (3 mal mit je 20 ml auf 60°C temperiertes Wasser) und im Vakuumtrockenschrank bei 30°C und 0,1 mbar getrocknet.

**Tabelle 1:**

| Eingesetzte Perfluorcarbonsäuren | | |
|---|---|---|
| **Perfluorcabonsäure** | **Molekulargewicht g/mol** | **Reinheit %** |
| F(CF₂)₆COOH | 364,06 | 99 |
| F(CF₂)₇COOH | 414,07 | 96 |
| F(CF₂)₉COOH | 514,08 | 98 |
| F(CF₂)₁₇COOH | 914,15 | 95 |

**Tabelle 2:**

| PE-T-Komplexe | | | |
|---|---|---|---|
| Komplex | Masse | Masse | Ausbeute |
| DADMAC/NMVA (m:n) - F(CF₂)ₚCOO | F(CF₂)ₚCOOH in g | DADMAC/ NMVA in g | in g (% d. Th.) |
| DADMAC/NMVA (25:75) - F(CF₂)₇COO | 0.31 | 0.30 | 0.32 (59) |
| DADMAC/NMVA (25:75) - F(CF₂)₉COO | 0.38 | 0.30 | 0.43 (71) |
| DADMAC/NMVA (25:75) - F(CF₂)₁₇COO | 0.69 | 0.30 | 0.76 (87) |
| DADMAC/NMVA (47:53) - F(CF₂)₇COO | 0.52 | 0.30 | 0.45 (63) |
| DADMAC/NMVA (47:53) - F(CF₂)₉COO | 0.63 | 0.30 | 0.62 (75) |
| DADMAC/NMVA (47:53) - F(CF₂)₁₇COO | 1.16 | 0.30 | 1.16 (92) |
| DADMAC/NMVA (65:35) - F(CF₂)₇COO | 0.66 | 0.30 | 0.60 (72) |
| DADMAC/NMVA (65:35) - F(CF₂)₉COO | 0.80 | 0.30 | 0.83 (86) |
| DADMAC/NMVA (65:35) - F(CF₂)₁₇COO | 1.48 | 0.30 | 1.45 (95) |
| DADMAC/NMVA (83:17) - F(CF₂)₇COO | 0.78 | 0.30 | 0.97 (85) |
| DADMAC/NMVA (83:17) - F(CF2)₉COO | 0.95 | 0.30 | 1.20 (89) |
| DADMAC/NMVA (83:17) - F(CF2)₁₇COO | 1.75 | 0.30 | 1.97 (91) |
| DADMAC/NMVA (100:0) - F(CF₂)₆COO | 1.00 | 0.40 | 0.69 (57) |
| DADMAC/NMVA (100:0) - F(CF₂)₇COO | 1.00 | 0.34 | 0.88 (77) |
| DADMAC/NMVA (100:0) - F(CF₂)₉COO | 1.00 | 0.28 | 0.87 (79) |
| DADMAC/NMVA (100:0) - F(CF₂)₁₇COO | 1.00 | 0.17 | 0.97 (90) |

### 1.3 Polyethylenimin-perfluoroctanoat

54 g (130 mmol) Perfluoroctansäure (Fluka Chemie) werden in 500 ml Wasser bei 50°C gelöst. Es bildet sich eine klare viskose Lösung. Unter Rühren werden 100 ml wässrige Polyethyleniminlösung (20°C) innerhalb von 5 min zugetropft. Die Lösung enthält 5,6 g (130 mmol) Polyethylenimin (Aldrich Chemie, 50 Gew.-% wässrige Lösung, verzweigt, Mₙ ≈ 70.000, M_{w} = 750.000). Es bildet sich sofort ein weißer Niederschlag und es ist darauf zu achten, daß die Reaktionslösung gut durchmischt wird. Da die Mischung sehr viskos ist, geschieht dies am besten mit einem groben Rührwerk (z.b. KPG-Rührer mit 600-700 U/min). Die Komplexbildung ist exotherm und es kommt zu einem Temperaturanstieg um ca. 5 °C auf 54 bis 56°C. Nach Zugabe der Polyethyleniminlösung wird weitere 5 min gerührt und der Niederschlag sofort durch einen Faltenfilter von der wässrigen Phase abgetrennt. Der Niederschlag wird bei 50°C im Trockenschrank 12 h bei 10⁻¹ mbar entwässert, gemörsert und gesiebt. Das Produkt ist ein homogenes feinkörniges weißes Pulver mit einer nahezu quantitativen Ausbeute (59,2 g).

### 1.4 Poly-(ethylenimin-co-N-docosylethylenimin)-n-perfluornonat

Es werden 0,5 g (0,97 mmol, 1,1 eq) n-Perfluornonansäure in 100 ml entsalztem Wasser gelöst. Bei einer Temperatur von 70°C wird unter starkem Rühren langsam (1 Tropfen pro Sekunde) eine Lösung aus 0,08 g (88 mmol, 1,0 eq) Poly-(ethylenimin-co-N-docosylethylimin in 100 ml entsalztem Wasser zugegeben. Der pH-Wert der Polyelektrolytlösung wurde vorher mit Salzsäure (10%) auf pH 2 eingestellt. Es entsteht spontan ein weißer Niederschlag, der sofort abfiltriert und mit 200 ml 70°C heißem Wasser gewaschen wird. Der Niederschlag wird bei 30°C und 0,1 mbar 12 h getrocknet. Die Ausbeute beträgt 0,29 g (55% der Theorie).

### 1.5 Komplexe des Poly-(N,N,N-trimethylammonium-3-propylacrylamids)

### Poly-{N,N,N-trimethylammonium-3-propylacrylamid)-perfluoroctanoat

30 g (71,9 mmol) Perfluoroctansäure werden in 1250 ml Wasser bei 50°C gelöst und mit Natronlauge (10%) auf pH 6 eingestellt. Zu dieser Lösung werden unter starkem Rühren in 5 min 13,51 g (65,4 mmol) Poly-(N,N,N-trimethylammonium-3-propylacrylamid Chlorid) (Stockhausen GmbH) zugetropft. Die klare Tensidlösung trübt sich sofort. Nach Zugabe des Polyelektrolyten wird weitere 5 min gerührt. Man läßt die Mischung auf Raumtemperatur abkühlen und gießt die wässrige Phase ab. Zurück bleibt ein transparenter gelartiger Rückstand. Dieser wird mit 500 ml Wasser bei 60°C gewaschen und anschließend bei 50°C und 10⁻¹ mbar 12 h getrocknet. Die Ausbeute beträgt 32,9 g (90% der Theorie).

### Poly-(N,N,N-trimethylammonium-3-propylacrylamid)-Fluowet SB®

Es werden 15 g (28% w.w., 4,6 mmol, 1,1 eq) Fluowet SB® in 150 ml entsalztem Wasser vorgelegt. Bei Raumtemperatur gibt man unter Rühren langsam (1 Tropfen pro Sekunde) eine Lösung aus 0,86 g (4,2 mmol, 1 eq) Poly-(trimethylammoniumchlorid-propylacrylamid) in 50 ml entsalztem Wasser zu, die mit Satzsäure (10% w/w) auf pH 2-3 eingestellt wurde. Es bildet sich ein Niederschlag, der sofort mit einem Büchnertrichter abfiltriert, dann gewaschen (3 mal mit je 20 ml auf 60°C temperiertes Wasser) und im Vakuumtrockenschrank bei 30°C und 0,1 mbar getrocknet wird. Die Ausbeute beträgt 4,3 g (=98% der Theorie).

### 1.6 Poly-(acryloxy-undexyl-trimethylammonium)-n-perfluoroctanoat

Es werden 0,61 g (1,47 mmol, 1,1 eq) n-Perfluoroctansäure in 100 ml entsalztem Wasser vorgelegt und mit Natronlauge (10%) auf pH 9 eingestellt. Bei 30°C erfolgt die langsame Zugabe einer Lösung aus 0,43 g (1,35 mmol, 1,0 eq) Poly-(acryloyl-undecyl-trimethyl-ammoniumchlorid) in 100 ml entsalztem Wasser. Es entsteht spontan ein feiner weißer Niederschlag, der sofort mit einem Büchnertrichter abfiltriert und mit warmen Wasser gewaschen wird. Anschließend wird der Niederschlag bei 30°C und 0,1 mbar über 12 h getrocknet. Die Ausbeute beträgt 0,50 g (94% der Theorie).

### 1.7 Komplexe des Ionen-6,3

### Ionen-6,3 Fluowet SB®

Es werden 20 g (28% w/w, 6,1 mmol, 1,1 eq) Fluowet SB® in 200 ml entsalztem Wasser vorgelegt. Bei einer Temperatur von 35°C erfolgt die langsame Zugabe (1 Tropfen pro Sekunde) einer Lösung aus 1,04 g (2,8 mmol, 1 eq) Hexadimethrindibromid (Ionen-6,3) in 50 ml entsalztem Wasser. Es bildet sich ein Niederschlag, der mit einem Büchnertrichter abfiltriert, gewaschen (5 mal mit je 20 ml auf 60°C temperiertes Wasser) umd im Vakuumtrockenschrank bei 30°C und 0,1 mbar getrocknet wird. Die Ausbeute beträgt 5,3 g (96% der Theorie).

### lonen-6,3-Zonyl TBS®

Es werden 20 g (28% w/w, 6,1 mmol, 1,1 eq) Fluowet SB® in 200 ml entsalztem Wasser vorgelegt. Bei einer Temperatur von 35°C erfolgt unter Rühren die langsame, tropfenweise Zugabe einer Lösung aus 1,04 g (2,8 mmol, 1 eq) Hexadimethrin-dibromid (lonen-6,3) in 50 ml entsalztem Wasser. Es bildet sich ein Niederschlag, der mit einem Büchnertrichter sofort abfiltriert, dann gewaschen (5 mal mit je 20 ml auf 60°C temperiertes Wasser) und im Vakuumtrockenschrank bei 30°C und 0,1 mbar getrocknet wird. Die Ausbeute beträgt 5,3 g (=96% der Theorie).

### 1.8 Chitosan-Fluowet-SB®

Es werden 5,5 g (28% w/w, 1,7 mmol, 1,1 eq) Fluowet SB® in 100 ml entsalztem Wasser vorgelegt. Bei Raumtemperatur tropft man unter Rühren langsam (1 Tropfen pro Sekunde) eine Lösung aus 0,25 g Chitosan (Aldrich, niedermolekular) in 50 ml 1% Essigsäure zu. Es bildet sich ein Niederschlag, der mit einem Büchnertrichter sofort abfiltriert, gewaschen (3 mal mit je 20 ml auf 60°C temperiertes Wasser) und im Vakuumtrockenschrank bei 30°C und 0,1 mbar getrocknet wird. Die Ausbeute beträgt 1,3 g (=81% der Theorie).

Bei diesem Komplex besteht die Besonderheit, daß der Polyelektrolyt Chitosan aus biologischen Rohstoffen gewonnen wird und biologisch vollständig abbaubar ist. Er wird aus Krebsschalen, einem Abfallprodukt der Fischereiindustrie, hergestellt.

### 1.9 Polystyrolsulfonat-Hoe-L-3658-1

Es werden 2,5 g (40% w/w) des kationischen Tensids Hoe-L-3658-1 in 500 ml entsalztem Wasser gelöst und mit Natronlauge (10% w/w) auf einen pH-Wert von 9 eingestellt. Bei 60°C wird unter Rühren langsam (1 Tropfen pro Sekunde) eine Lösung aus 0,55 g Polystyrolsulfonat-Natriumsalz (PSSNa, 2,7 mmol) in 100 ml entsalztem Wasser zugetropft. Es entsteht ein feiner bräunlicher Niederschlag. Dieser wird mit einem Büchnertrichter abfiltriert, gewaschen (3 mal mit je 20 ml auf 60°C temperiertes Wasser) und im Vakuumtrockenschrank bei 30°C und 0,1 mbar betrocknet. Die Ausbeute beträgt 1,4 g (=89% der Theorie, bei Annahme 1,38 g C₆F₁₃CH₂CH₂N(CH₃)₃CH₃SO₄.

### 2. Herstellung wässriger Emulsionen

3g Poly-(trimethylammonium-propylacrylamid)-Fluowet SB® werden mit 20 g flüssigem Fluowet OTN® (Hoechst AG) sorgfältig vermischt. in diesem ersten Schritt entsteht dabei eine homogene weiße viskose Masse. Im zweiten Schritt wird dieses Konzentrat portionsweise mit Wasser verdünnt, z.B. 20, 40, 100 oder 200 ml. Es ist darauf zu achten, daß gut homogenisiert wird. Bei diesem Prozeß gelangt man aus dem mesomorphen Pulver zu einer feinverteilten Emulsion. Der Anteil des Emulgators kann stark variiert werden. Beispielsweise werden wie oben 6 g Komplex und 10 g Emulgator oder 12 g Komplex und 10 g Emulgator eingesetzt. Alle Emulsionen sind über einen Zeitraum von mindestens 2 Wochen bei 20°C stabil.

### 3. Beschichten einer Aluminiumoberfläche mit Fluorkomplex-Emulsion und die Entfernung von Graffiti

Eine wässrige Emulsion (bestehend aus 10 g Poly-(N,N,N-trimethylammonium-3-propyl-acrylamid)-Fluowet SB® -Komplex, 10 g Fluowet OTN® -Lösung und 40 ml Wasser, hergestellt nach Beispiel 2, wird mit einem Pinsel auf ein 200 x 200 mm großes Aluminiumblech (Aluminium F22) in einer Größe von 100 x 100 mm aufgetragen. Über Nacht (ca. 12 h) ist die Emulsion bei 18-20°C und einer Luftfeuchtigkeit von 70% eingetrocknet. Das Blech wird mit einem handelsüblichen Acryl-Lack (Auto-Color, schnelltrocknend, Fabton 6-12, Vogelsang GmbH) besprüht und der Lack 48 h ausgehärtet. Anschließend wurde das Blech mit einer 30°C warmen Spülmittellösung (Pril Supra, Henkel) und einem Schwamm (Glitzi Spülschwamm) mit leichtem Druck abgerieben. Bei dieser Behandlung löst sich der Lack innerhalb von 30 s vollständig von der beschichteten Fläche. Auf der unbeschichteten Vergleichsfläche des gleichen Blechs bleibt der Lack unversehrt haften.

### 4. Beschichtung von Fahrzeugteilen mit Emulsionen

Eine wässrige Emulsion (bestehend aus 3 g Poly-(N,N,N-trimethylammonium-3-propylacrylamid)-Fluowet SB® -Komplex 20g Fluowet OTN® -Lösung und 200 ml Wasser, hergestellt nach Beispiel 2, wird mit einem handelsüblichen Pumpzerstäuber auf einen Kotflügel aufgetragen und mit einem Baumwollappen verrieben. Bei Beregnung bilden sich auf unbeschichteten Lackteilen große zusammenhängende Tropfen, während das Wasser von den beschichteten Stellen vollständig abläuft. Je nach Emulgatoanteil hält dieser Effekt unterschiedlich lange an. Bei der hier verwendeten hohen Emulgatorkonzentration verschwand der Effekt sukzessive. Nach zehn starken Regenfällen war kein Effekt mehr nachweisbar. Eine Veränderung des Lacks durch die Beschichtung konnte nicht nachgewiesen werden. Es sind somit Emulsionnen der Komplexe für temporäre Beschichtungen lackierter Oberflächen herstellbar.

### 5. Beschichtung lackierter Oberflächen und die Entfernung von Beschriftungen

Eine Arcryllackoberfläche wird durch 10 gewichtsprozentige Komplexlösungen mit einem Laborzerstäuber gleichmäßig beschichtet. Nach 1 bis 5 min hat sich ein trockener transparenter Komplexfilm auf der Lackoberfläche gebildet. Mit Hilfe der Sessile-Drop-Methode werden die Oberflächenenergien bestimmt. In allen Fällen werden Oberflächenenergien gefunden, die die von Teflon (20,3 mN/m) unterschreiten. Die genauen Werte finden sich in der folgenden Tabelle.

**Tabelle 3:**

| **Komplexmaterial** | **Oberflächenenergie in mN/m** |
|---|---|
| Polyethylenimin-Perfluoroctanoat | 12 |
| Poly-(trimethylammonium-propylacrylamid)-perfluoroctanoat | 16 |
| Poly-(trimethylammonium-propylacrylamid)-Fluowet SB® | 14 |
| unbeschichtet | 57 |

Anschließend werden alle Flächen mit einem Signierstift (Edding 400, permanent marker) beschriftet. Die Beschriftung kann mit einem Baumwolllappen und Nagellackentferner (Aceton) oder N-Methylpyrrolidon problemlos von den beschichteten Flächen entfernt werden, ohne daß der Acryllack beschädigt wird. Im Gegensatz dazu löst sich auf der unbeschichteten Vergleichsfläche der Lack bei der Behandlung mit Aceton sofort an und bleibt am Lappen haften.

### 6. Beschichtung einer Aluminiumoberfläche

10 ml einer 2 gewichtsprozentigen alkoholischen Komplexlösung werden mit einem Laborzerstäuber (Aldrich) bei einem Druck von 1 bar auf ein 200 x 200 mm großes Aluminiumblech gleichmäßig aufgetragen. Nach Verdunsten des Lösungsmittels bleibt auf dem Blech ein vollkommen transparenter Film zurück, der nur bei seitlichem Lichteinfall schwach zu erkennen ist. Aus der eingesetzten Substanzmenge und der Materialdichte von ca. 1,6 g/cm³ ergibt sich eine Schichtdicke von ca. 3µm. Die Messung der Oberflächenenergie nach der Sessile-Drop-Methode ergibt einen Wert von ca. 18 mN/m (Messung mit Hexadecan) und liegt somit deutlich unter dem Wert, der für Polytetrafluorethylen gefunden wird (20,3 mN/m). Es kann somit gezeigt werden, daß bereits durch den Einsatz sehr geringer Substanzmengen eine hochenergetische Metalloberfläche sehr einfach in eine ultraniederenergetische Oberfläche transformiert werden kann. Im Gegensatz zu Polyetrafluorethylen ist für die Schicht kein Haftvermittler notwendig.

### 7. Vereisung einer beschichteten Aluminiumoberfläche

Die Vermeidung von Vereisungen auf Flugzeugtragflächen besitzt ein hohes Anwendungspotential in der zivilen sowie in der militärischen Luftfahrt. In diesen Bereichen sind in den Wintermonaten große Aufwendungen notwendig, um Tragflächen zu enteisen. Die Vereisung von Tragflächen bewirkt ein erhebliches Sicherheitsrisiko im Flugverkehr. Daher wird das Vereisungsverhalten von beschichteten Aluminiumplatten untersucht. Die Beschichtung erfolgt entsprechend Beispiel 6. Im Test wird eine 200 x 200 mm große Aluminiumplatte auf Temperaturen von -50°C abgekühlt und das Vereisungsverhalten aufgezeichnet.

Der Aufbau des Experiments besteht aus einem Dewar-Gefäß von 20 cm Durchmesser, das mit flüssigem Sticksotff gefüllt ist und in dem sich ein massiver würfelförmiger Aluminiumblock mit einer Kantenlänge von 15 cm befindet. Dabei ragt die Oberkante des Aluminiumblocks 2-3 mm über die Oberkante des Dewar-Gefäßes hinaus. Zur Temperaturmessung wird in der Mitte des Aluminiumblechs ein Ni-Chrom/Ni-Thermoelement befestigt. Das Blech wird auf den Aluminiumblock gelegt und diese Zeit als t=0 festgesetzt. Der Verlauf der Vereisung wird über einen Zeitraum von 2 Stunden verfolgt. Das Experiment wird zuerst mit der unbeschichteten Platte und in einem zweiten Experiment mit der identischen, aber beschichteten Platte wiederholt. Die Beschichtung erfolgt entsprechend dem vorhergehenden Beispiel. Während des Experiments beträgt die Lufttemperatur 19°C und die relative Luftfeuchtigkeit 70%.

Die Ergebnisse sind in der folgenden Tabelle zusammengefaßt. Die unbeschichtete Aluminiumplatte beschlägt spontan, nachdem sie auf den gekühlten Aluminiumblock gelegt wird. Nach 1 min hat sich bereits eine klar erkennbare dünne Eisschicht gebildet. im Vergleich dazu wird bei der beschichteten Platte kein spontanes Beschlagen und nach 1 min keine Eisbildung beobachtet. Nach 11 min hat sich auf der unbeschichteten Platte bereits eine erhebliche Eisschicht mit einer Dicke von 1-2 mm gebildet. Bei der beschichteten Platte wird zum gleichen Zeitpunkt eine beginnende Eisbildung gefunden. Diese ist vergleichbar mit derjenigen, die bei der unbeschichteten Platte bereits nach 1 min beobachtet wird. Nach 30 min wird auf beiden Platten eine dichte Eisschicht festgestellt, deren Stärke unterschiedlich ist: Bei der unbeschichteten Platte beträgt sie ca. 5-6 mm und bei der beschichteten ca. 1-2 mm. D.h., sie ist bei der unbeschichteten Platte erheblich dicker. Innerhalb von 120 min wachsen die Eisschichten auf Dicken von 8-9 mm bei der unbeschichteten Platte und auf 5-6 mm bei der beschichteten Platte an. In dieser Zeit hat sich auf der unbeschichteten Platte von 400 cm² Größe und einer Masse von 100 g insgesamt 15 g Eis abgelagert, wogegen auf der beschichteten, aber sonst identischen Platte nur 10 g Eis gefunden wurden. Dieser Versuch zeigt, daß bei der beschichteten Platte eine erhebliche Verzögerung in der Eisbildung zu beobachten ist. Überraschenderweise weist die Beschichtung eine Oberflächenstrukturierung auf, die die Bildung von Eiskeimen stark herabsetzt.

Im zweiten Teil des Versuchs wird versucht, die Eissschicht, die sich nach zwei Stunden auf den Platten gebildet hat, mit einem Kältespray zu entfernen. Mit dem Kältespray (Super 75, Kontakt Chemie, CRC Industries Deutschland GmbH), das eine Abkühlung bis -52°C erlaubt, wird in einem Abstand von ca. 10 cm auf die Platte gesprüht und so versucht, das Eis zu entfernen. Es zeigt sich, daß die Haftung des Eises auf der beschichteten Platte deutlich gegenüber derjenigen der unbeschichteten Platte reduziert ist. Von der beschichteten Platte kann das Eis durch Besprühen mit dem Kältespray fast vollständig entfernt werden, was bei der unbeschichteten Platte nicht möglich ist. Dabei kann die Eisschicht an den Rändern der Platte durch einfaches Sprühen nicht entfernt werden, da die Plattenkanten unbeschichtet sind und sich somit am Rand der Platte eine starke Eishaftung wie bei einer unbeschichteten Platte ergibt. Auch das aufliegende Thermoelement, das unbeschichtet ist, bleibt von Eis bedeckt. Dieser Versuchsteil belegt, daß die Haftung der Eisschicht durch Beschichtung deutlich reduziert wird. Somit ergibt sich eine synergistische Wirkung der Beschichtung auf die Eisbildung derart, daß sowohl eine Verzögerung der Eisbildung auftritt als auch die Haftung von gebildetem Eis vermindert ist. Beide Effekte sind vorteilhaft für die Verminderung von Tragflächenvereisungen in der Luftfahrt.

**Tabelle 4:**

| **Zeit/min** | **Platte unbeschichtet** | **Platte beschichtet** |
|---|---|---|
| 1 | Temperatur: -9 °C Platte beschlägt spontan Eisbildung | Temperatur: -10°C Platte beschlägt nicht keine Eisbildung |
| 11 | Temperatur: -50°C Eisschicht von ca. 1-2 mm Dicke | Temperatur: -52°C Platte beschlägt |
| 30 | Temperatur: -55°C Eisschicht von ca. 5-6 mm Dicke | Temperatur: -58°C Eisschicht von ca. 1-2 mm Dicke |
| 120 | Temperatur: -57°C Eisschicht von ca. 8-9 mm Dicke | Temperatur: -60°C Eisschicht von ca. 5-6 mm Dicke |

### 8. Beschichtung einer mikroporösen Kunststoff-Membran

Für eine unübersehbare Zahl verschiedenster Anwendungen ist die Oberflächenmodifizierung von Kunststoffen von hohem Interesse. Daher wird im folgenden Experiment untersucht, ob es möglich ist, mit Hilfe der beschriebenen Komplexe porenfreie Filme auf Polymeroberflächen herzustellen. Des weiteren liegen die Fragen zugrunde, wie groß dazu die notwendigen Substanzmengen sind und welche Gaspermeationseigenschaften diese Filme besitzen.

Geeignet für die Untersuchung aller drei Ziele an einem Trägermaterial ist Celgard 2400 (Hoechst Celanese Coporation). Es handelt sich bei Celgard 2400 um mikroporöse Membranfolien aus Polypropylen und Polyethylen mit schlitzförmigen Poren in einer Größe von 0,04 x 0,12 µm und einer Porosität von 41%.

Die Beschichtung mit den erfindungsgemäßen Komplexen erfolgt durch Eintauchen einer DIN A 4 großen Celgard 2400 Folie in eine alkoholische Lösung des Komplexes. Der Gewichtsanteil der Komplexe beträgt 0,5 bis 10%, vorzugsweise 2%. Die Celgardfolie wird aus der Lösung herausgenommen und überschüssige Lösung zwischen zwei Rollen abgestreift. Nach Verdunsten unter Trocknen des Lösungsmittels werden die Gaspermeabilitäten der Gase Stickstoff, Sauerstoff und Kohlendioxid bei Raumtemperatur gemessen. Die Zeitdauer der Filmpräparation bei Raumtemperatur liegt bei 10 min bis 60 min, typischerweise bei 30 min.

Die Ergebnisse der Gaspermeationsmessungen können wie folgt zusammengefaßt werden: Ab einer Belegungsdichte von 5 bis 15 g/m² werden zusammenhängende dichte Filme gefunden. D.h. alle Poren der Celgardfolie sind geschlossen. Diese Filme sind dicht bis zu Gasdrücken von mindestens 5 bis 10 bar Überdruck. Die Gaspermeationseigenschaften zeigen, daß die erfindungsgemäßen Komplexbeschichtungen sich zur selektiven Gastrennung eignen. So zeigt bei 5 bar Überdruck eine Beschichtung von Komplex Poly-(trimethylammoniumchlorid-propylacrylamid)-Fluowet-SB® (6,62 g/m²) eine um 1,6-fach höhere Permeabilität von Kohlendioxid gegenüber Stickstoff und eine um 1,2-fach höhere Permeabilität von Sauerstoff gegenüber Stickstoff. Eine Beschichtung von lonen-6,3-Zonyl-TBS® auf Celgard (11,26 g/m²) zeigt ebenfalls bei 5 bar Überdruck eine um 1,2-fach höhere Selektivität von Kohlendioxid gegenüber Stickstoff und eine um 2,0-fach höhere Selektivität von Sauerstoff gegenüber Stickstoff.

Die Gaspermeationsmessungen belegen, daß es möglich ist, auf sehr einfache Art die Poren der Celgardfolie mit sehr geringen Substanzmengen zu schließen. Die durch Beschichtung entstandene Filme besitzen hervorragende Druckstabilitäten. Bei einer Substanzmenge von 5 bis 10 g/m² und einer Dichte von ca. 1,6 g/m² ergeben sich Schichtdicken von 3-6 µm. Die Gasdurchlässigkeit der Filme weicht stark vom diffusionskontrollierten Knudsenfluß, wie er für ein poröses Material gefunden wird, ab. Weiterhin kann die Durchlässigkeit für einzelne Gase gesteuert werden. Poly-(trimethylammoniumchlorid-propylacrylamid)-Fluowet-SB® zeigteine starke Kohlendioxiddurchlässigkeit, Ionen-6,3-Zonyl-TBS® zeigt eine starke Sauerstoffdurchlässigkeit. Dieses Experimentbelegt, daßstabile Kunststoffbeschichtungen, bestehend aus dünnen Komplexfilmen, hergestellt werden können. Weiterhin lassen das einfache Herstellungsverfahren, die geringen Schichtdicken, die hohe Druckstabilität und die variable Selektivität gegenüber verschiedenen Gasen auf ein hohes Anwendungspotential für sehr unterschiedliche Gastrennprozesse schließen.

### 9. Beschichtung von Baumaterialien mit gelösten Komplexen und die Entfernung von Graffiti

Auf Platten in einer Größe von 200 x 200 mm mit unterschiedlichem Material (Granit, Sandstein, Marmor) wird gelöstes fluoriertes Komplexmaterial mit einem Laborzerstäuber augetragen. Dabei wird jeweils die Hälfte einer Platte abgedeckt, so daß ein mit Komplex geschützter Oberflächenbereich und ein ungeschützter Bereich vorhanden ist. Die Trockenzeit beträgt 30 bis 60 min. Nach dieser Zeit ist das Lösungsmittel verdunstet und es hat sich ein transparenter Film gebildet. Dieser ist nicht oder nur sehr schwach bei schräger Ansicht erkennbar.

Nach 2 Tagen werden sowohl die geschützten als auch die ungeschützen Flächen mit Acryllack (Auto-Color, schnelltrocknend, Farbton 6-12, Vogelsang GmbH) besprüht und der Lack 48 h ausgehärtet. Anschließend kann die Besprühung durch Nagellackentferner (Aceton) oder N-Methylpyrrolidon und einem Papiertuch von den beschichteten Flächen rückstandfrei entfernt werden. Auf den Vergleichsflächen bleiben dagegen erhebliche Farbrückstände bestehen.

### 10. Beschichtung von Papier mit gelösten Komplexen und die Entfernung von Beschriftungen

Auf verschiedenen Papieren und Zeitschriften (Größe: DIN A4) wird mit einem Pumpzerstäuber gelöstes Komplexmaterial aufgetragen. Nach Verdunsten des Lösungsmittels bleibt ein optisch nicht erkennbarer Film zurück. Die so präparierten Unterlagen werden mit einem Signierstift (Edding 400, permanent marker) bemalt. Die Bemalung wird mit einem ethanolgetränkten Papiertuch von den beschichteten Papieren rückstandsfrei entfernt. Auf unbeschichtetem Vergleichsmaterial verläuft die Farbe in den Papierfasern und eine Entfernung ist nicht möglich.

### 11. Oberflächenenergien der Beschichtungen

Zur quantitativen Erfassung der Veränderung der Oberflächeneigenschaften durch Beschichtung mit Komplexen werden Kontaktwinkelmessungen nach der Sessile-Drop-Methode von Neumann und Li (J. Coll. Interf. Sci. 148 (1992), 190) mit dem Kontaktwinkelmeßgerät G10 der Firma Kruss (Deutschland) durchgeführt. Aus den gemessenen Kontaktwinkeln werden die Oberflächenenergien nach der Young-Gleichung gestimmt. Die Messungen erfolgen mit Hexadecan als Testflüssigkeit. Für alle in den Synthesebeispielen aufgeführten erfindungsgemäßen Komplexe werden Oberflächenenergien zwischen 13 und 20 mN/m ermittelt. Die Werte sind dabei unabhängig von der Art des Trägermaterials. Für Glas, lackierte Metallteile, unbehandeltes Aluminium, beschichtetes Papier und Sandstein ergeben sich jeweils die gleichen Werte. Dies läßt darauf schließen, daß sich bei allen untersuchten Untergründen fluorhaltige Gruppen (CF₂ und CF₃) an der Film/Luft-Grenzfläche anreichern. Die Oberflächenenergien typischer unbeschichteter Materialien betragen 50 mN/m für Wolle, 50 mN/m für Eisen, 36 mN/m für Polystyrol, 23 mN/m für Polydimethylsiloxan und 20,3 mN/m für Polytetrafluorethylen. Somit liegen die für die Beschichtungen gefundenen Werte noch deutlich unter denen der beiden letzten Materialien, welche die Standards für niederenergetische Oberflächen darstellen.

in allen Flächen wird eine unterschiedlich große, aber signifikante Hysterese zwischen dem advancing und dem receeding Winkel gefunden, die je nach Material und Herstellungsbedingungen der Beschichtung zwischen 5 und 20° liegt. Dies ist durch Oberflächenrauhigkeiten im mikroskopischen Bereich erklärbar. Für Polytetrafluorethylen wird in der Literatur für den advancing Winkel 116° (13,7 mN/m) und für receeding Winkel 92° (28 mN/m) angegeben. Damit ergibt sich für Polytetrafluorethylen eine starke Hysterese von 24°. Die erfindungsgemäßen Komplexe weisen somit eine deutlich niedrigere Hysterese auf.

In der WO 96/04123 werden selbstreinigende Oberflächen beschrieben, die auf systematischen Erhöhungen und Erniedrigungen mit Abständen von 5 bis 200 µm und Höhendifferenzen von 5 bis 100 µm beruhen. Solche Oberflächen sind in der Natur weit verbreitet und weisen keine signifikante Hysterese bei Kontaktwinkelmessungen auf. Die Tropfen der Testflüssigkeit können die Oberfläche aufgrund ihrer Strukturierung nicht benetzen, da es nur wenige und kleine Kontaktfläche mit der Unterlage gibt. Bei hier beschriebenen Fluortensid-Komplexen sind die gefundenen Hysteresen ein eindeutiger Beweis dafür, daß keine derartige Oberflächenstrukturierung vorliegt.

### 12. Charakterisierung der Oberflächen durch EM und EDX-Analyse

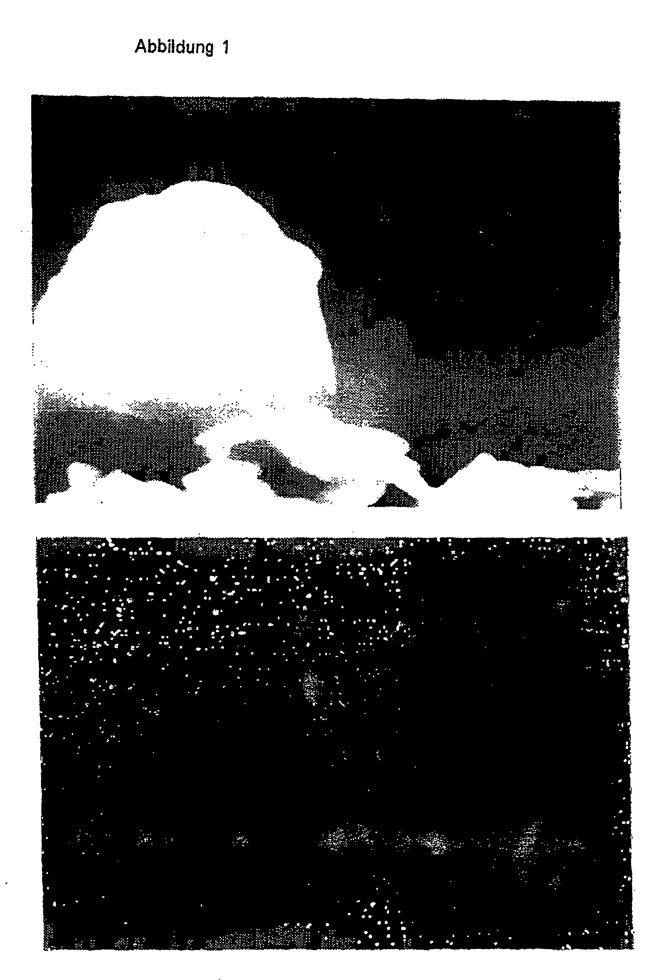

Ein Film des Komplexes Poly-(trimethylammoniumchlorid-propylacrylamid)-Fluowet-SB® wird für 2 min in flüssigem Stickstoff abgekühlt, der so spröde gewordene Film gebrochen und die Bruchkante im Scanning-Elektronenmikroskop (SEM) abgebildet. Das obere Bild in Abb. 1 zeigt eine solche Bruchkante bei 20 kV Beschleunigungsspannung und einer Vergrößerung von 5000. Gut erkennbar ist die hell dargestellte Bruchkante und die dunkel erscheinende Filmoberfläche. Die abgerundete Bruchkante auf der linken Bildhälfte besitzt einen Durchmesser von ca. 5 µm.

Der Film wird daraufhin mit einer EDX-Analyse (Energy Dispersed X-Ray) spezifisch auf die Anwesenheit von Fluor (F_{Kα}=0,2675 keV) untersucht. Die Messung der gleichen Bruchkante wie auf der SEM-Darstellung zeigt das untere Bild in Abb. 1. Die hellen Spots sind Bereichen mit hohem Fluoranteil zuzuordnen. Man erkennt, daß die Filmoberfläche, die im SEM dunkel erscheint, von zahireichen Spots belegt ist, während die im SEM hell erscheinende Bruchkante nur wenige solcher Spots aufweist. Das bedeutet, daß die Oberfläche gegenüber dem Bulkmaterial stark an Fluor angereichert ist, die Fluorgruppen (CF₂ und CF₃) somit tatsächlich wie bevorzugt an der Filmoberfläche zu finden sind.

### 13. Vergleich von Oberflächenenergie und Wasseraufnahme

Wesentlich für die Einsatzfähigkeit der Beschichtungsmaterialien zum Einsatz im Bautenbereich ist, daß sie die Oberflächen nicht wasserdicht versiegeln. Sie müssen also in der Lage sein, Wasser aufzunehmen. Nehmen sie allerdings zuviel Wasser auf und quellen zu stark, dann sind sie ebenfalls nicht brauchbar. Daher ist es notwendig, die Wasseraufnahme steuern zu können. Am Beispiel der Komplexe der Perfluordecansäure mit den Copolymeren des Diallyl-dimethylammonium-chlorids (DADMAC) und des N-Methyl-Vinylacetamids (NMVA) soll demonstriert werden, wie bei etwa gleicher Oberflächenenergie die Wasseraufnahmekapazität ganz erheblich variiert werden kann. Dies geschieht bei gleichem Tensid, der perfluorierten Decansäure, durch Veränderung der Copolymerzusammensetzung. Die Wasseraufnahme dieser Komplexe bei 20 °C und 100% relativer Luftfeuchtigkeit steigt mit zunehmendem DADMAC-Anteil von 1,4 % (25% DADMAC) auf 6,3% (99% DADMAC) an.

**Tabelle 5:**

| DADMAC/NMVA | Wasseraufnahme [%] | Oberflächenenergie [mN/m] |
|---|---|---|
| 25:75 | 1,4 | 14,0 |
| 47:63 | 3,6 | 13,5 |
| 65:35 | 3,8 | 14,6 |
| 83:17 | 4,8 | 14,7 |
| 100:0 | 6,3 | 15,6 |

### 14. Röntgenkleinwinkelstreuung

Alle untersuchten Komplexe werden mit Hilfe der Röntgenkleinwinkelstreuung untersucht. Es wird gefunden, daß in jedem Fall eine flüssigkristallähnliche Struktur vorliegt. Dies ist erkennbar an Kleinwinkelrefiexen, die einem Bragg-Abstand zwischen 1 und 100 nm entsprechen. In diesem Punkt verhalten sich die fluorierten Komplexe ähnlich wie die nichtfluorierten Komplexe, die in DE 4428641 beschrieben sind. Dort ist jedoch betont, daß die Komplexe nach dem Ausfällen aus wässriger Lösung amorph sind (keine Kleinwinkelreflexe). Dann werden sie in einem organischen Lösungsmittel gelöst und in einem dritten Schritt verfilmt. Es wird dort noch einmal besonders hervorgehoben, daß erst nach Verfilmen aus organischem Lösungsmittel eine mesomorphe Ordnung vorliegt (es treten Kleinwinkelreflexe auf).

im Gegensatz dazu finden wir bei fluorierten Komplexen sowohl nach dem Ausfällen aus wässriger Lösung, wie auch nach der Verfilmung aus einem organischen Lösungsmittel die gleichen Kleinwinkelreflexe, d.h. eine mesomorphe Struktur liegt schon direkt bei der Komplexbildung im wässrigen Medium vor.

### 15. Röntgenweitwinkelstreuung

Die Beschichtungen besitzen nur dann eine hohe Transparenz, wenn sie keine Kristallinität besitzen. Dies ist sehr schnell und einfach durch Röntgenweitwinkelmessungen festzustellen.

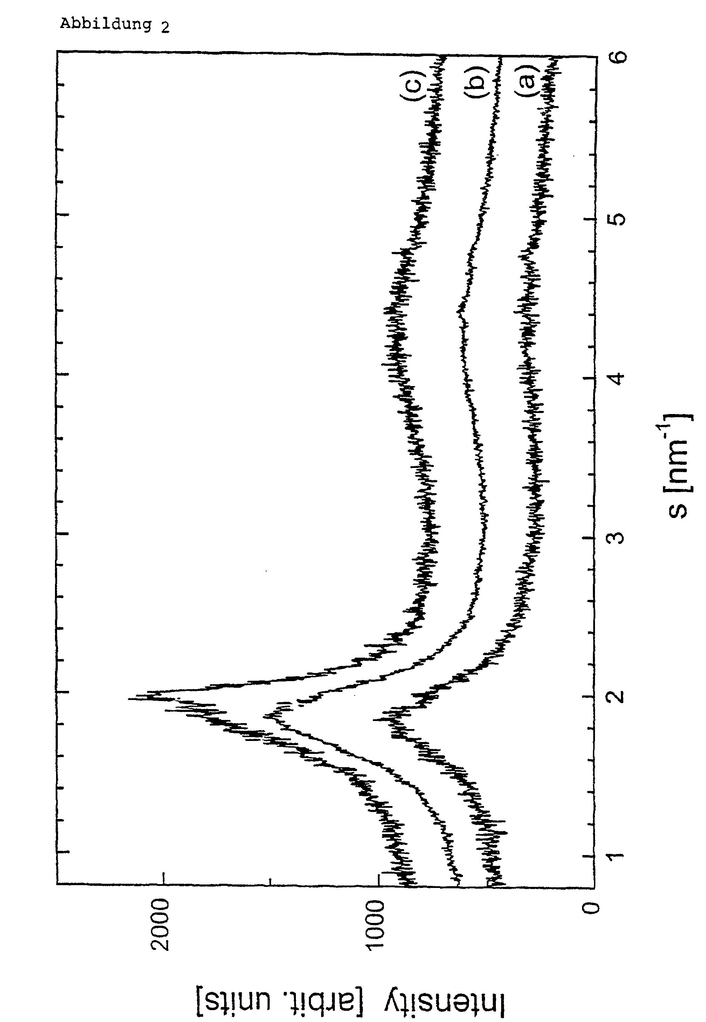

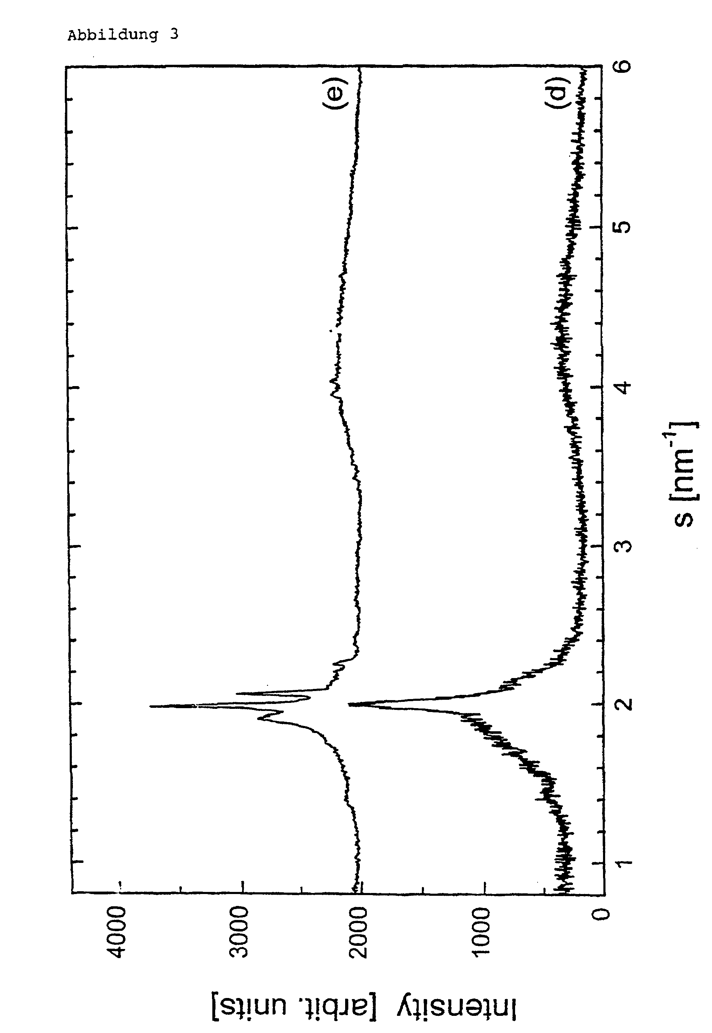

Bei den erfindungsgemäßen Komplexen sind nur wenige breite Reflexe zu finden. Typischerweise findet man einen intensiven Reflex bei ca. 1,9 nm⁻¹ und einen schwächeren Reflex bei ca. 4,2 nm⁻¹ (siehe Abb. 2). Sobald eine Kristallinität auftritt, finden sich mehrere oder zahlreiche schmale Reflexe im Weitwinkeldiffraktogramm. Im Bereich um 2 nm⁻¹ sind mindestens zwei scharfe Reflexe zu beobachten. Dies verdeutlicht Abb. 3. Das Diffraktogramm 3d zeigt einen Komplex, der noch zu den erfindungsgemäßen Komplexen zählt. Er besitzt um 2 nm⁻¹ nur einen, wenn auch schmalen Reflex. Im Diffraktogramm 3e sind in diesem Bereich mehrere Reflexe zu beobachten. Das heißt, der Komplex ist kristallin, er zählt nicht mehr zu den erfindungsgemäßen Komplexen.

Neben einer klaren Analytik ermöglichen die Röntgenweitwinkeldiffraktogramme auch, den Einfluß der Copolymerisate auf die Struktur nachzuweisen. Es handelt sich bei den Diffraktogrammen 2a bis c und bei 3d um Poly-(diallyldimethylammonium-co-N-methyl-N-vinylacetamid)-perfluordecanoat (Siehe Synthesen). Der Diallyldimethyl-ammoniumanteil der Copolymere beträgt 25% (a), 47% (b), 65% (c) und 83% (d). Die Weitwinkeldiffraktogramme belegen, daß alle copolymerhaltigen Komplexe keine Kristallinität besitzen. Das homopolymere Poly-(diallyl-dimethylammonium)-perfluordecanoat (3e) ist dagegen kristallin oder besitzt zumindest deutliche kristalline Anteile.

## Patentansprüche

1. Komplex umfassend mindestens einen nichthygroskopischen Polyelektrolyten und mindestens ein entgegengesetzt geladenes fluoriertes Tensid.

2. Komplex nach einem der Anspruch 1,
**dadurch gekennzeichnet,**
**daß** er einen katiopischen Polyelektrolyten und ein anionisches Tensid oder einen anionischen Polyelektrolyten und ein kationisches Tensid enthält.

3. Komplex nach einem der Ansprüche 1 oder 2,
**dadurch gekennzeichnet,**
**daß** er eine Wasseraufnahme von maximal 5% (w/w) bezogen auf das Gewicht des Komplexes bei 20°C und 100% relativer Luftfeuchtigkeit aufweist.

4. Komplex nach einem der vorhergehenden Ansprüche,
**dadurch gekennzeichnet,**
**daß** er weiterhin mindestens ein nichtionisches Tensid enthält.

5. Verfahren zur Herstellung eines Komplexes nach einem der Ansprüche 1 bis 3,
**dadurch gekennzeichnet,**
**daß** man eine wässrige Lösung des Polyelektrolyten zu einer wässrigen Lösung des fluorierten Tensids gibt und das resultierende Präzipitat gewinnt.

6. Verfahren zur Herstellung eines Komplexes nach Anspruch 4,
**dadurch gekennzeichnet,**
**daß** man einen Komplex nach einem der Ansprüche 1 bis 3 mit der jeweils gewünschten Menge an nichtionischem Tensid versetzt.

7. Zusammensetzung,
**dadurch gekennzeichnet,**
**daß** sie einen Komplex nach einem der Ansprüche 1 bis 4 gelöst in einem polaren organischen Lösungsmittel enthält.

8. Zusammensetzung,
**dadurch gekennzeichnet,**
**daß** sie einen Komplex nach einem der Ansprüche 1 bis 4 emulgiert in einem wässrigen Lösungsmittel enthält.

9. Verfahren zur Herstellung einer Zusammensetzung nach Anspruch 8,
**dadurch gekennzeichnet,**
**daß** man einen Komplex nach einem der Ansprüche 1 bis 4 mit einem nichtionischen Tensid in der jeweils gewünschten Menge versetzt, in ein im wesentlichen homogenes Gemisch überführt und das Gemisch mit Wasser verdünnt, um eine wäßrige Emulsion zu erhalten.

10. Verwendung eines Komplexes nach einem der Ansprüche 1 bis 4 oder einer den Komplex enthaltenden Zusammensetzung zur Beschichtung von Oberflächen.

11. Verwendung nach Anspruch 10,
**dadurch gekennzeichnet,**
**daß** die Oberflächen ausgewählt werden aus Glas, Stein, Holz, Papier, Metall, Kunststoff, Naturstoffen und lackierten Oberflächen.

12. Verwendung nach einem der Ansprüche 10 oder 11, als Antisoiling-, insbesondere als Antigraffitimittel, als Schutzmittel beim Transport von Fahrzeugen oder Maschinen, als Vereisungsschutz, als Anti-Fouling-Beschichtung, als Trenn- und Gleitmittel, als Mittel zur lmprägnierung von Textilien oder als Membran.

13. Verfahren zur Beschichtung einer Oberfläche,
**dadurch gekennzeichnet,**
**daß** man auf die Oberfläche eine Zusammensetzung nach einem der Ansprüche 7 oder 8 aufbringt und eintrocknet.

14. Gegenstand,
**dadurch gekennzeichnet,**
**daß** er mindestens teilweise mit einem Komplex nach einem der Ansprüche 1 bis 4 beschichtet ist.

## Claims

1. Complex comprising at least one nonhygroscopic polyelectrolyte and at least one oppositely charged fluorinated surfactant.

2. Complex according to one of claim 1, **characterised in that** it comprises a cationic polyelectrolyte and an anionic surfactant or an anionic polyelectrolyte and a cationic surfactant.

3. Complex according to any of claims 1 or 2, **characterised in that** it has a water absorption of not more than 5% (w/w), based on the weight of the complex, at 20°C and 100% relative atmospheric humidity.

4. Complex according to any of the preceding claims, **characterised in that** it further comprises at least one non-ionic surfactant.

5. Method of preparing a complex according to any of claims 1 to 3, **characterised in that** an aqueous solution of the polyelectrolyte is added to an aqueous solution of the fluorinated surfactant and the resultant precipitate is isolated.

6. Method of preparing a complex according to claim 4,
**characterised in that** the particular desired amount of non-ionic surfactant is added to a complex according to any of claims 1 to 3.

7. Formulation, **characterised in that** it comprises a complex according to any of claims 1 to 4 in solution in a polar organic solvent.

8. Formulation, **characterised in that** it comprises a complex according to any of claims 1 to 4 in emulsion in an aqueous solvent.

9. Method of preparing a formulation according to claim 8, **characterised in that** the particular desired amount of a non-ionic surfactant is added to a complex according to any of claims 1 to 4, the resulting mixture is converted into a substantially homogeneous mixture, and the mixture is diluted with water in order to obtain an aqueous emulsion.

10. Use of a complex according to any of claims 1 to 4 or a formulation containing the complex to coat surfaces.

11. Use according to claim 10, **characterised in that** the surfaces are selected from glass, stone, wood, paper, metal, plastic, natural substances and painted surfaces.

12. Use according to any of claims 10 or 11 as an anti-soiling composition, in particular an anti-graffiti composition, as a means of protection during the transit of vehicles or machines, as icing protection, as an anti-fouling coating, as a release agent and lubricant, as a composition for impregnating textiles or as a membrane.

13. Method of coating a surface, **characterised in that** a formulation according to any of claims 7 or 8 is applied to said. surface and dried.

14. Article, **characterised in that** it is coated at least in part with a complex according to any of claims 1 to 4.

## Revendications

1. Complexe comprenant au moins un polyélectrolyte non hygroscopique et au moins un agent tensioactif fluoré ayant une charge opposée.

2. Complexe selon la revendication 1, **caractérisé en ce qu'**il contient un polyélectrolyte cationique et un agent tensioactif anionique ou un polyélectrolyte anionique et un agent tensioactif cationique.

3. Complexe selon l'une des revendications 1 ou 2, **caractérisé en ce qu'**il possède une capacité d'absorption d'eau égale au maximum à 5 % (poids/poids) rapportés au poids du complexe à 20°C et pour une humidité relative de l'air de 100 %.

4. Complexe selon l'une des revendications précédentes, **caractérisé en ce qu'**il contient au moins en outre au moins un agent tensioactif non ionique.

5. Procédé pour produire un complexe selon l'une de revendications 1 à 3, **caractérisé en ce qu'**on ajoute une solution aqueuse du polyélectrolyte à une solution aqueuse de l'agent tensioactif fluoré et qu'on obtient le précipité résultant.

6. Procédé pour produire un complexe selon la revendication 4, **caractérisé en ce qu'**on mélange un complexe selon l'une des revendications 1 à 3, à une quantité respective désirée d'un agent tensioactif non ionique.

7. Composition **caractérisée en ce qu'**elle contient un complexe selon l'une des revendications 1 à 4, dissous dans un solvant organique polaire.

8. Composition **caractérisée en ce qu'**elle contient un complexe selon l'une des revendications 1 à 4, émulsionné dans un solvant aqueux.

9. Procédé pour produire une composition selon la revendication 8, **caractérisé en ce qu'**on mélange un complexe selon l'une des revendications 1 à 4 à un agent tensioactif non ionique en la quantité respectivement désirée, qu'on le transforme en un mélange essentiellement homogène et qu'on dilue le mélange avec de l'eau pour obtenir une émulsion aqueuse.

10. Utilisation d'un complexe selon l'une des revendications 1 à 4, ou d'une composition contenant le complexe, pour le recouvrement de surface.

11. Utilisation selon la revendication 10, **caractérisée en ce qu'**on choisit les surfaces parmi des surfaces en verre, en pierre, en bois, en papier, en métal, en matière plastique, en matériau naturel et des surfaces peintes.

12. Utilisation selon l'une des revendications 10 ou 11, en tant qu'agent anti-salissement, notamment en tant que produit anti-graffitis, en tant qu'agent de protection lors de transport de véhicules ou de machines, en tant que protection contre la rouille, en tant que revêtement anti-fouling, en tant qu'agent de séparation et agent favorisant le glissement, en tant que moyen pour imprégner des textiles ou en tant que membrane.

13. Procédé pour recouvrir une surface, **caractérisé en ce qu'**on fait sécher sur la surface une composition selon l'une des revendications 7 ou 8.

14. Objet, **caractérisé en ce qu'**il est recouvert au moins en partie par un complexe selon l'une des revendications 1 à 4.
